# EUROPEAN PATENT APPLICATION

(11) **EP 3 120 961 A1**
(43) Date of publication of application: **25.01.2017**
(21) Application number: 16179887.1
(22) Date of filing: 18.07.2016
(51) Int. Cl.: B23H 7/20

(54) **WIRE ELECTRIC DISCHARGE MACHINE**

(30) Priority: 21.07.2015 JP 2015144238
(71) Applicant: FANUC CORPORATION, Oshino-mura Minamitsuru-gun Yamanashi 401-0597 (JP)
(72) Inventor: MAKINO, Yoshinori, Minamitsuru-gun, Yamanashi 401-0597 (JP)
(74) Representative: Ward, James Norman

(57) **Abstract**

The present invention provides a wire electric discharge machine including an automatic connection function that enables automatic connection to be securely performed even when no person is present in the surroundings of the machine (with no manual operation). The wire electric discharge machine performs automatic setting procedure of a connection condition and determines whether it is the time point stored in a computer numerical control (CNC) device. When it is the time point stored (YES), an automatic connection condition 2 is read. When it is not the time point stored (NO), an automatic connection condition 1 is read. The wire electric discharge machine then performs disconnection procedure and connection procedure to complete the process.

## Description

### BACKGROUND OF THE INVENTION

### 1. Field of the Invention

The present invention relates to a wire electric discharge machine including an automatic connection device.

### 2. Description of the Related Art

In a wire electric discharge machine, in accordance with the diameter of a used wire, the thickness of a workpiece, for example, various parameters for automatic connection are changed so that the wire is connected securely and as quickly as possible. Operations related to the automatic connection are roughly classified into wire disconnection and wire connection. In the parameters included are a value of a current supplied to the wire and a duration therefor on the disconnection of the wire, a flow rate or a duration of fluid required for cooling the wire on the disconnection of the wire, and a wire feed speed during wire connection. Furthermore, during wire connection, a connection operation of the wire may fail due to some disturbance. In such a case, a reconnection operation of the wire is performed. For the reconnection operation, it might be necessary to take into consideration the various parameters, such as the length for which the wire is rewound, the number of times for which the wire is rewound, and the flow rate of the liquid that helps feeding of the wire during connection.

Japanese Patent Application Laid-Open No. 2013-129048 discloses a technique related to a wire electric discharge machine including a connection parameter automatically selecting function for varying the parameters in accordance with the number of retries.

The requirements on the automatic reconnection is that the connection operation has to be performed as quickly as possible without fail. The workpieces to be machined by a wire electric discharge machine may be of a type that has many machining start holes. The time required before completed the workpiece machining depends substantially on whether the wire connection is effected successfully or not and the connection speed thereof.

For this reason, the parameters are set to the optimum values for performing the connection operation as quickly as possible without fail. The various parameters are set precisely in accordance with the diameter of the wire, the thickness of a workpiece, presence of a water reservoir in a machining tank, whether the position in which the connecting operation is effected is a machining groove or not, and the size of a machining start hole.

However, the frequency of failures of wire connection become increased with the soiling of the machine or depending on the consumption degree of a consumable parts used in an automatic connection device. In such a case, maintenance needs to be performed, or the various parameters for the automatic connection need to be varied. Even when the machine gets stained or the expected lifetime of the consumable parts are close to the end, an adjustment can be made by varying the parameters so as to reduce failures. Although this leads the time required for the connection operation becomes longer than the normal operation time, the frequency of failures can be reduced.

In general, when a person (operator) is present in the surroundings of the machine in the day time, for example, and the frequency of failures increases, it is possible to make maintenance on the machine or to vary the parameters by the operator. However, this cannot be effected during an unmanned overnight operation, for example. The frequency of failures increases as a result, disabling completion of the machining within a desired time interval.

Japanese Patent Application Laid-Open No. 2013-129048 discloses a technique related to a wire electric discharge machine including a function of automatically selecting the connection parameters that varies the parameters in accordance with the number of retries. However, with the technique, even when a person (operator) is present in the surroundings of the wire electric discharge machine, the parameters are selected in accordance with the number of retries, causing a problem that the flexibility of the machine operation is low.

### SUMMARY OF THE INVENTION

The object of the present invention is to provide a wire electric discharge machine including an automatic connection function that enables automatic connection to be securely performed even when no person is present in the surroundings of the machine (with no manual intervention).

According to the present invention, the duration for which no person is in the surroundings of the machine is set on a screen of the machine. When the set time point (the commencement time of the duration) comes, each parameter for automatic connection is automatically changed to optimum values for reducing the frequency of failures. Alternatively, a luminance sensor is attached to the machine so that even when no person is in the surroundings of the machine such as in the night time for example, the parameter values are varied to the optimum values on the basis of the signals obtained by the sensor. Alternatively, a motion sensor may also be used so that even when no person is present in the surroundings of the machine, the parameter values can be varied to the optimum values.

The wire electric discharge machine according to the present invention includes an automatic wire connection device for connecting the disconnected wire automatically. The machine includes a parameter sets storing unit, a time setting means, and a parameter sets switching means. The parameter sets storing unit stores a parameter sets formed respectively of a combination of a plurality of parameters, each parameter set is a condition for performing automatic connection. The time setting means sets a time for switching the parameter sets. The switching means switches the parameter sets based on the set time.

The setting means may set a time point for switching the parameter sets and the switching means may switch the parameter sets based on a current time point and the set time point.

Alternatively, the setting means may set a predetermined time point and a time interval elapsed from the predetermined time point and the switching means may switch the parameter sets based on the time interval elapsed from the predetermined time point.

Alternatively, the setting means may set a time interval elapsed from performed a predetermined operation and the switching means may switch the parameter sets based on the elapsed time interval.

Alternatively, a wire electric discharge machine according to the present invention including an automatic connection device for the automatic connection of a wire electrode includes a parameter sets storing unit, a luminance sensor, and a parameter sets switching means. The parameter sets storing unit stores parameter sets formed respectively of a combination of a plurality of parameters, each parameter set is a condition for performing automatic connection. The luminance sensor detects a luminance in the surroundings of the wire electric discharge machine or a luminance outside the building with the wire electric discharge machine installed therein. The parameter sets switching means switches the parameter sets based on a detected value from the luminance sensor.

The wire electric discharge machine may include a reference value setting means that sets a reference value for the detected value from the luminance sensor and the parameter sets switching means may switch the parameter sets when the detected value from the luminance sensor exceeds the reference value set by the reference value setting means.

Alternatively, the wire electric discharge machine may include a reference value setting means that sets a reference value for the detected value from the luminance sensor and the parameter sets switching means may switch the parameter sets when a predetermined time interval has elapsed after the detected value from the luminance sensor becomes equal to or smaller than the reference value set by the reference value setting means from a value larger than the reference value.

Alternatively, the wire electric discharge machine may include a reference value setting means that sets a reference value for the detected value from the luminance sensor and the parameter sets switching means may switch the parameter sets when a predetermined time interval has elapsed after the detected value from the luminance sensor becomes equal to or smaller than the reference value set by the reference value setting means from a value larger than the reference value, and then the detected value does not exceed the reference value.

Alternatively, the wire electric discharge machine may include a reference value setting means that sets a reference value for the detected value from the luminance sensor and the parameter sets switching means may switch the parameter sets when a predetermined time interval has elapsed after the detected value from the luminance sensor becomes equal to or larger than the reference value set by the reference value setting means from a value smaller than the reference value.

Alternatively, the wire electric discharge machine may include a reference value setting means that sets a reference value for the detected value from the luminance sensor and the parameter sets switching means may switch the parameter sets when a predetermined time interval has elapsed after the detected value from the luminance sensor becomes equal to or larger than the reference value set by the reference value setting means from a value smaller than the reference value, and then the detected value does not fall below the reference value.

Alternatively, the wire electric discharge machine may include a reference value setting means that sets a reference value for the detected value from the luminance sensor and the parameter sets switching means may switch the parameter sets when the detected value from the luminance sensor becomes equal to or larger than the reference value set by the reference value setting means from a value smaller than the reference value, and then an operation of a screen is performed.

A wire electric discharge machine according to the present invention includes an automatic connection device for the automatic connection of a wire electrode and includes a parameter sets storing unit, a motion sensor, and a parameter sets switching means. The parameter sets storing unit stores parameter sets formed respectively of a combination of a plurality of parameters, each parameter set is a condition for performing automatic connection. The motion sensor senses that a person is present in the surroundings of the wire electric discharge machine. The parameter sets switching means switches the parameter sets based on a detected value from the motion sensor.

When no person is detected in a predetermined time interval after a person is detected by the motion sensor, the parameter sets may be switched.

When a person is detected by the motion sensor after the parameter sets are switched, the parameter sets may be switched.

When a person is detected by the motion sensor after the parameter sets are switched, and then a person is detected again in a predetermined time interval, the parameter sets may be switched.

The present invention can provide a wire electric discharge machine including an automatic connection function that enables automatic connection to be securely performed even when no person is present in the surroundings of the machine (with no manual operation).

### BRIEF DESCRIPTION OF THE DRAWINGS

These and other objects and features of the present invention will become apparent from the following description of exemplary embodiments with reference to the accompanying drawings in which:
Fig. 1 is a functional block diagram of a wire electric discharge machine including an automatic connection function;
Fig. 2 is a diagram for explaining a flow of an embodiment in which setting of parameters is switched based on a set time point;
Fig. 3 is a diagram for explaining a flow of an embodiment in which setting of parameters is switched based on a detected value obtained from a luminance sensor; and
Fig. 4 is a diagram for explaining a flow of an embodiment in which setting of parameters is switched based on a detected value obtained from a motion sensor.

### DETAILED DESCRIPTION OF THE PREFERRED EMBODIMENTS

The embodiments of the present invention will now be described with reference to the attached drawings.

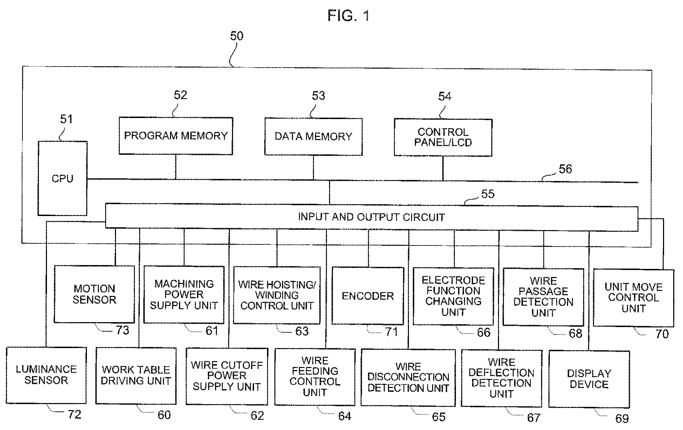

Fig. 1 is a functional block diagram of a wire electric discharge machine including an automatic wire connection function. A control device 50 of the wire electric discharge machine includes a central processing unit (hereinafter, simply referred to as "CPU") 51 formed of a microprocessor. The CPU 51 is connected with a program memory 52, a data memory 53, a control panel 54 including a liquid crystal display (LCD), and an input and output circuit 55 via a bus 56.

Various programs for controlling each part of the wire electric discharge machine and the control device 50 itself of the wire electric discharge machine are stored in the program memory 52. Furthermore, positional data accompanied with a machining program and various setting data defining other machining conditions are stored in the data memory 53. The data memory 53 is also used as a memory for storing a plurality of parameter sets defining conditions for performing automatic connection. Furthermore, the data memory 53 may also be used as a memory for temporarily storing data for various calculations performed by the CPU 51. The data memory 53 also has a register region for calculating an output pulse of an encoder 71 and another register region for storing trouble occurrence position data.

The input and output circuit 55 is connected with a work table driving unit 60, a machining power supply unit 61, a wire cutoff power supply unit 62, a wire hoisting/winding control unit 63, a wire feeding control unit 64, the encoder 71, a wire disconnection detection unit 65, an electrode function switching unit 66, a wire deflection detection unit 67, a wire passage detection unit 68, a display device 69, and a movement control unit 70 for controlling the movement of the other parts of the wire electric discharge machining units.

The work table driving unit 60 and the machining power supply unit 61 are of known structures and controlled upon performed the machining operation in accordance with the methods known in the art upon performed the machining operation. The wire cutoff power supply unit 62 supplies a wire with power required for cutting the wire in a heating region during connection. The wire hoisting/winding control unit 63 drives a motor for driving a wire winding roll and a hoisting motor (not illustrated).

The wire feeding control unit 64 is adapted to perform driving control of a motor for driving a wire feeding roll. A rotation amount of this motor is detected by the encoder 71. The wire disconnection detection unit 65 detects disconnection occurred in the operation of machining and utilizes a mechanism of prior art (for example, the disconnection of the wire can be detected through the variation of a current flowing in a wire or the tension applied to a winding roll).

The electrode function switching unit 66 is for selectively switch between a wire disconnection electrode and a wire passage detection electrode. The wire passage detection unit 68 detects the potential of the wire when the wire is connected to a power supply for wire passage detection (not illustrated). Meanwhile, the wire deflection detection unit 67 is connected to a wire deflection detection electrode (not illustrated) to detect the potential of this electrode and determines contact/noncontact between the electrode and the wire based on a change in the potential of the electrode.

The display device 69 is a device for displaying wire trouble position information in various forms and is used when real time alarm display of a wire trouble occurrence position is performed and a trouble occurrence frequency for each interval is displayed in a graph, for example, in accordance with a display program stored in the program memory 52.

In the memory of the control device 50 of the wire electric discharge machine, a program for position detection/recording of a wire connection trouble, a program for performing automatic connection processing, and the like are stored. With this, the wire electric discharge machine can have an automatic connection device. The memory including these programs is known in the art and the description thereof is thus omitted. Since these programs are stored in the memory, automatic wire connection may be performed in accordance with a plurality of parameters determining conditions for automatic connection in Claim 1.

The structure of the above-described wire electric discharge machine is the same as that of a prior art. In one embodiment of the present invention, a time for switching parameters for automatic wire connection can be further set by operating the control panel 54 including an LCD. The control device 50 includes a clock function and the time for switching input by operating the control panel 54 is adapted to be stored in the data memory 53. In the other embodiments of the present invention, the control device 50 is adapted to be connected with at least one of a luminance sensor 72 and a motion sensor 73.

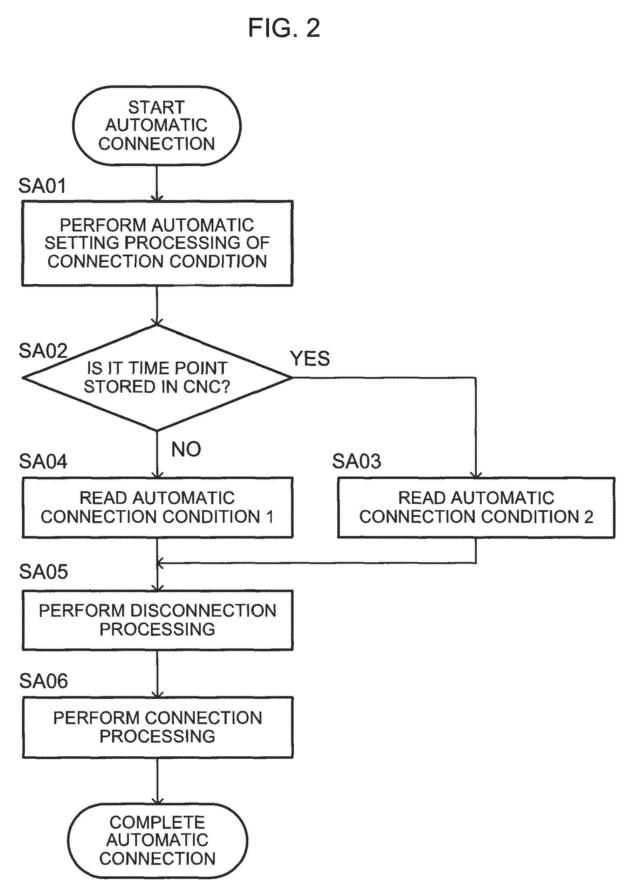

Fig. 2 is a diagram for explaining a flow of an embodiment in which a setting of parameters is changed based on a set time point. This is a flowchart indicating that a condition for automatic connection is switched automatically based on set time points (A time point and B time point). For example, when the time points for switching are set to 20:00 (A time point) and 8:00 (B time point), the condition for automatic connection implemented from 20:00 to 8:00 is automatically switched from a normal connection condition 1 to a connection condition 2 in which the automatic connection is effected more reliably.

In the connection condition 2, a connection speed is low and a relatively long time interval is taken for the disconnection of the wire so as to sufficiently correct the bending of the wire, for example, so that the time required for the connection operation is increased but the connection can more reliably be effected. Especially in an unmanned night-time operation, a more secure automatic operation is required, so that a control method employing this method is thus effective.

As variations of this embodiment, there are setting methods (1) to (3) as described below.
(1) Time points for switching are set to 20:00 (time point A) and 8:00 (time point B) (specified date information is included or not).
(2) Time points for switching are set to 20:00 (time point A) and to that after a cumulative time of 8 hours (time interval B) from the time point A (specified date information is included or not).
(3) A time point for switching is set to 20:00 (time point A), and when any of the buttons on the screen is pressed and a predetermined time interval (time interval B) has elapsed after that, the connection condition is switched.

Explanation will be made below in accordance with steps.
[Step SA01] Automatic setting procedure of the connection condition is performed.
[Step SA02] A determination is made whether it is the time point stored in a computer numerical control (CNC) device. When it is the time point stored (YES), the procedure proceeds to Step SA03. When it is not the time point stored (NO), the procedure proceeds to Step SA04.
[Step SA03] An automatic connection condition 2 is read, and the procedure proceeds to Step SA05.
[Step SA04] An automatic connection condition 1 is read, and the procedure proceeds to Step SA05.
[Step SA05] Disconnection procedure is performed in accordance with the read automatic connection condition.
[Step SA06] Connection procedure is performed to complete the procedure.

As described above, the wire electric discharge machine according to the present embodiment including an automatic connection device for the automatic connection of a wire electrode includes a parameter set storing unit, a switching time setting means, and a parameter sets switching means. The parameter sets storing unit stores parameter sets formed respectively of a combination of a plurality of parameters, each parameter set is a condition for performing automatic connection. The setting means sets a time for switching the parameter sets. The switching means switches the parameter sets based on the set time.

The present embodiment also includes "an aspect in which the setting means sets a time point for switching the parameter sets and the switching means switches the parameter sets based on a current time point and the set time point", "an aspect in which the setting means sets a predetermined time point and a time interval elapsed from the predetermined time point and the switching means switches the parameter sets based on a time interval elapsed from the predetermined time point", and "an aspect in which the setting means sets a time interval elapsed from the time point at which a predetermined operation is performed and the switching means switches the parameter sets based on the elapsed time interval".

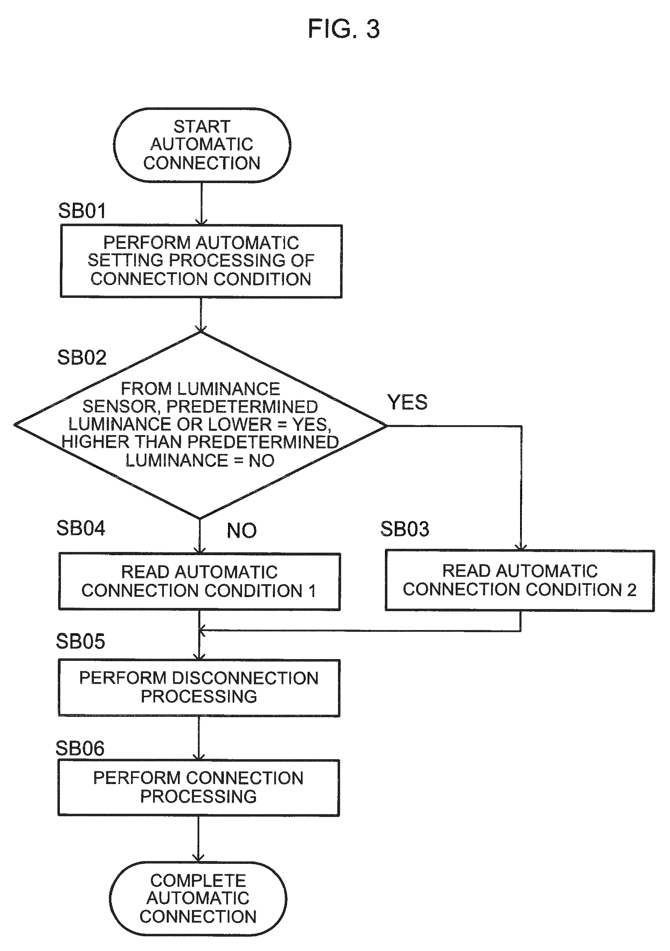

Fig. 3 is a diagram for explaining a flow of an embodiment in which a set of parameters is switched based on a detected value obtained from a luminance sensor. This is a flowchart indicating that a condition for automatic connection is switched automatically using a luminance sensor. For example, when the detected luminance is equal to or lower than a set luminance, it is determined that the machine is under an unmanned operation in the night time, for example, and the condition for automatic connection to be used is automatically switched from the normal connection condition 1 to the connection condition 2 in which the automatic connection can more reliably be effected.

As variation examples of this embodiment, there are switching methods (1) to (4) described below.
(1) When the luminance is equal to or lower than a luminance (A) and that state has not changed even after a predetermine time interval (time interval B) has elapsed
(2) When the luminance is equal to or lower than a luminance (A) and a time interval (time interval B) has elapsed
(3) As a pattern to return to the original setting, when the state in which the luminance is equal to or higher than a luminance (A) has continued for a set time interval (time interval B)
(4) As a pattern to return to the original setting, when any of the buttons on the screen is pressed in the state in which the luminance is equal to or higher than a luminance (A). It should also be noted the parameter sets may be switched after a predetermined time interval has elapsed after the button on the screen is pressed.

The luminance sensor may be installed in the vicinity of the wire electric discharge machine or installed outside the building with the wire electric discharge machine installed therein. In such a case, signals are to be transmitted to the wire electric discharge machine via wireless or wired connection.

Explanation will be made below in accordance with steps.
[Step SB01] Automatic setting procedure of the connection condition is performed.
[Step SB02] A determination is made whether a luminance detected by the luminance sensor is equal to or lower than a predetermined luminance or higher than the predetermined luminance. When the luminance detected by the luminance sensor is equal to or lower than the predetermined luminance (YES), the procedure proceeds to Step SB03. When the luminance detected by the luminance sensor is higher than the predetermined luminance (NO), the procedure proceeds to Step SB04.
[Step SB03] The automatic connection condition 2 is read and the procedure proceeds to Step SB05.
[Step SB04] The automatic connection condition 1 is read and the procedure proceeds to Step SB05.
[Step SB05] Disconnection procedure is performed in accordance with the read automatic connection conditions.
[Step SB06] Connection procedure is performed to complete the procedure.

As described above, the wire electric discharge machine according to the present embodiment including an automatic connection device for the automatic connection of a wire electrode includes a parameter sets storing unit, a luminance sensor, and a parameter sets switching means. The parameter sets storing unit stores parameter sets formed respectively of a combination of a plurality of parameters, each parameter set is a condition for performing automatic connection. The luminance sensor detects a luminance in the surroundings of the wire electric discharge machine or a luminance outside the building with the wire electric discharge machine installed therein. The parameter sets switching means switches the parameter sets based on a detected value from the luminance sensor.

The embodiment according to the present invention also includes "an aspect in which the wire electric discharge machine includes a reference value setting means that sets a reference value for the detected value from the luminance sensor and the parameter sets switching means switches the parameter sets when the detected value from the luminance sensor exceeds the reference value", "an aspect in which the wire electric discharge machine includes a reference value setting means that sets a reference value for the detected value from the luminance sensor and the parameter sets switching means switches the parameter sets when a predetermined time interval has elapsed after the detected value from the luminance sensor becomes equal to or smaller than the reference value from a value larger than the reference value", "an aspect in which the wire electric discharge machine includes a reference value setting means that sets a reference value for the detected value from the luminance sensor and the parameter sets switching means switches the parameter sets when a predetermined time interval has elapsed after the detected value from the luminance sensor becomes equal to or smaller than the reference value from a value larger than the reference value, and then the detected value does not exceed the reference value", "an aspect in which the wire electric discharge machine includes a reference value setting means that sets a reference value for the detected value from the luminance sensor and the parameter sets switching means switches the parameter sets when a predetermined time interval has elapsed after the detected value from the luminance sensor becomes equal to or larger than the reference value from a value smaller than the reference value", "an aspect in which the wire electric discharge machine includes a reference value setting means that sets a reference value for the detected value from the luminance sensor and the parameter sets switching means switches the parameter sets when a predetermined time interval has elapsed after the detected value from the luminance sensor becomes equal to or larger than the reference value from a value smaller than the reference value, and then the detected value does not fall below the reference value", and "an aspect in which the wire electric discharge machine includes a reference value setting means that sets a reference value for the detected value from the luminance sensor and the parameter sets switching means switches the parameter sets when the detected value from the luminance sensor becomes equal to or larger than the reference value from a value smaller than the reference value, and then an operation of a screen is performed".

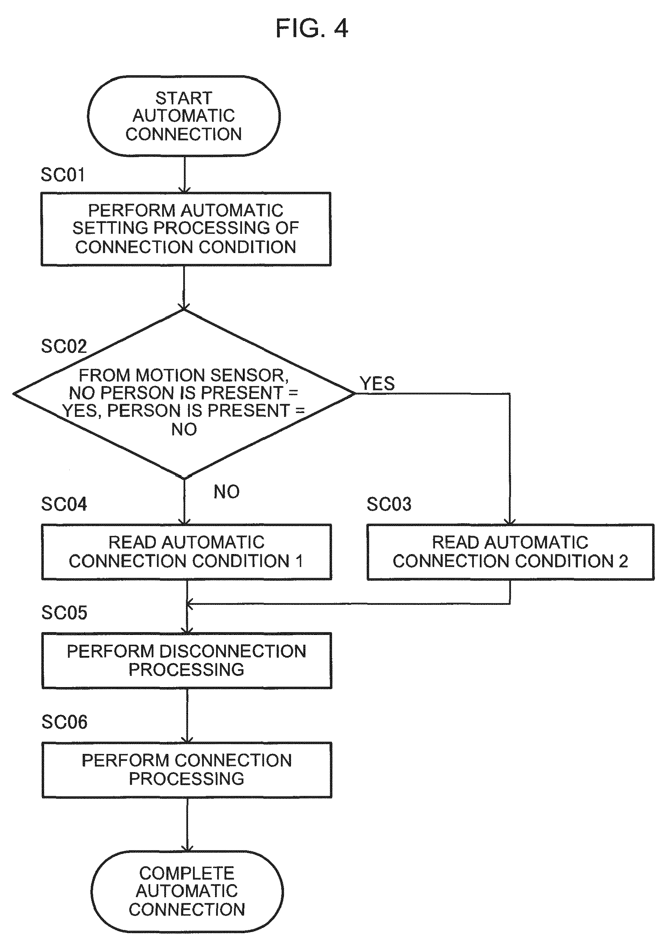

Fig. 4 is a diagram for explaining a flow of an embodiment in which a set of parameters is switched based on a detected value obtained from a motion sensor.

As variation examples of this embodiment, there are three switching methods (1) to (3) as described below.
(1) Parameters are switched when a person is detected finally by the motion sensor, and then a predetermined time interval (time interval B) for which no person is detected again had elapsed
(2) Parameters are immediately switched when a person is detected in the state of (1).
(3) Parameters are switched when a person is detected for the first time in the state of (1), and then a person is detected again in a predetermined time interval. When a person is detected again, the state of (1) continues.

Explanation will be made below in accordance with steps.
[Step SC01] Automatic setting procedure of the connection condition is performed.
[Step SC02] When no person is detected by the motion sensor (YES), the procedure proceeds to Step SC03. When a person is detected (NO), the procedure proceeds to Step SC04.
[Step SC03] The automatic connection condition 2 is read and the procedure proceeds to Step SC05.
[Step SC04] The automatic connection condition 1 is read and the procedure proceeds to Step SC05.
[Step SC05] Disconnection procedure is performed in accordance with the read automatic connection conditions.
[Step SC06] Connection procedure is performed to complete the whole procedure.

As described above, the wire electric discharge machine according to the present embodiment includes an automatic connection device for the automatic connection of a wire electrode and includes a parameter sets storing unit, a motion sensor, and a parameter sets switching means. The parameter sets storing unit stores parameter sets formed respectively of a combination of a plurality of parameters, each parameter set is a condition for performing automatic connection. The motion sensor senses that a person is present in the surroundings of the wire electric discharge machine. The parameter sets switching means switches the parameter sets based on a detected value from the motion sensor.

The embodiment according to the present invention also includes "an aspect in which when no person is detected in a predetermined time interval after a person is detected by the motion sensor, the parameter sets are switched", "an aspect in which when a person is detected by the motion sensor after the parameter set is changed, the parameter set is changed", and "an aspect in which when a person is detected by the motion sensor after the parameter sets are switched, and then a person is detected again in a predetermined time interval, the parameter sets are switched".

While the present invention has been described in terms of the preferred embodiments thereof, it is not intended to be so limited, but rather only to the extent set force in the claims that follow, and may be implemented in other forms by adding appropriate modifications.

## Claims

1. A wire electric discharge machine having an automatic connection device for the automatic connection of a wire electrode, the wire electric discharge machine comprising:
a parameter sets storing unit configured to store parameter sets formed respectively of a combination of a plurality of parameters, each parameter set is a condition for performing automatic connection;
a setting means configured to set a time interval for switching the parameter sets; and
a switching means configured to switch the parameter sets based on the set time interval.

2. The wire electric discharge machine according to Claim 1, wherein
the setting means sets a time point for switching the parameter sets and the switching means switches the parameter sets based on a current time point and the set time point.

3. The wire electric discharge machine according to Claim 1, wherein
the setting means sets a predetermined time point and a time interval elapsed from the predetermined time point and the switching means switches the parameter sets based on the time interval elapsed from the predetermined time point.

4. The wire electric discharge machine according to Claim 1, wherein
the setting means sets a time interval elapsed from the time point at which a predetermined operation is performed and the switching means switches the parameter sets based on the elapsed time interval.

5. A wire electric discharge machine having an automatic connection device for the automatic connection of a wire electrode, the wire electric discharge machine comprising:
a parameter sets storing unit configured to store parameter sets formed respectively of a combination of a plurality of parameters, each parameter set is a condition for performing automatic connection;
a luminance sensor configured to detect a luminance in the surroundings of the wire electric discharge machine or a luminance outside the building with the wire electric discharge machine installed therein; and
a parameter set switching means configured to switch the parameter sets based on a detected value from the luminance sensor.

6. The wire electric discharge machine according to Claim 5, comprising:
a reference value setting means configured to set a reference value for the detected value from the luminance sensor, wherein
the parameter sets switching means switches the parameter sets when the detected value from the luminance sensor exceeds the reference value set by the reference value setting means.

7. The wire electric discharge machine according to Claim 5, comprising:
a reference value setting means configured to set a reference value for the detected value from the luminance sensor, wherein
the parameter sets switching means switches the parameter sets when a predetermined time interval has elapsed after the detected value from the luminance sensor becomes equal to or smaller than the reference value set by the reference value setting means from a value larger than the reference value.

8. The wire electric discharge machine according to Claim 5, comprising:
a reference value setting means configured to set a reference value for the detected value from the luminance sensor, wherein
the parameter sets switching means switches the parameter sets when a predetermined time interval has elapsed after the detected value from the luminance sensor becomes equal to or smaller than the reference value set by the reference value setting means from a value larger than the reference value, and then the detected value does not exceed the reference value.

9. The wire electric discharge machine according to Claim 5, comprising:
a reference value setting means configured to set a reference value for the detected value from the luminance sensor, wherein
the parameter sets switching means switches the parameter sets when a predetermined time interval has elapsed after the detected value from the luminance sensor becomes equal to or larger than the reference value set by the reference value setting means from a value smaller than the reference value.

10. The wire electric discharge machine according to Claim 5, comprising:
a reference value setting means configured to set a reference value for the detected value from the luminance sensor, wherein
the parameter sets switching means switches the parameter sets when a predetermined time interval has elapsed after the detected value from the luminance sensor becomes equal to or larger than the reference value set by the reference value setting means from a value smaller than the reference value, and then the detected value does not fall below the reference value.

11. The wire electric discharge machine according to Claim 5, comprising:
a reference value setting means configured to set a reference value for the detected value from the luminance sensor, wherein
the parameter sets switching means switches the parameter sets when the detected value from the luminance sensor becomes equal to or larger than the reference value set by the reference value setting means from a value smaller than the reference value, and then an operation of a screen is performed.

12. A wire electric discharge machine having an automatic connection device for the automatic connection of a wire electrode, the wire electric discharge machine comprising:
a parameter sets storing unit configured to store a parameter sets formed respectively of a combination of a plurality of parameters, each parameter set is a condition for performing automatic connection;
a motion sensor configured to sense that a person is present in the surroundings of the wire electric discharge machine; and
a parameter sets switching means configured to switch the parameter sets based on a detected value from the motion sensor.

13. The wire electric discharge machine according to Claim 12, wherein
when no person is detected in a predetermined time interval after a person is detected by the motion sensor, the parameter sets are switched.

14. The wire electric discharge machine according to Claim 13, wherein
when a person is detected by the motion sensor after the parameter sets are switched, the parameter set is changed.

15. The wire electric discharge machine according to Claim 13, wherein
when a person is detected by the motion sensor after the parameter sets are switched, and then a person is detected again in a predetermined time interval, the parameter set is changed.
